# EUROPEAN PATENT APPLICATION

(11) **EP 4 776 240 A1**
(43) Date of publication of application: **15.07.2026**
(21) Application number: 25305030.6
(22) Date of filing: 10.01.2025
(51) Int. Cl.: G06V 10/774, G06V 20/69

(54) **METHOD AND SYSTEM TO GENERATE A TRAINING SET FOR TRAINING A MODEL ANALYSING HISTOLOGICAL IMAGES**

(71) Applicant: Owkin France SAS, 75009 Paris (FR)
(72) Inventor: Marteau, Ulysse, 75009 PARIS (FR); Horent, Guillaume, 75009 PARIS (FR); Gillet, Lucie, 75009 PARIS (FR); Gaury, Valentin, 75009 PARIS (FR); Dumont, Laura, 75009 PARIS (FR); Mathieu, Thomas, 75009 PARIS (FR); Belbhari, Reda, 75009 PARIS (FR); Von Loga, Katharina, 75009 PARIS (FR)
(74) Representative: Plasseraud IP

(57) **Abstract**

Provided is a method and system for generating a training set. The training set is used to train a model analysing histological images. The method comprises extracting a plurality of tiles from a histological image, the plurality of tiles being regions in the histological image, and selecting, from the plurality of tiles by a machine learning (ML) model, at least one tile for user annotation. The at least one selected tile is annotated by a user to obtain at least one user-annotated tile. The at least one user-annotated tile is added to the training set. The at least one user-annotated tile indicates cell nuclei, cell types, and/or cell locations present in the corresponding region of the histological image.

## Description

### TECHNICAL FIELD

The present invention relates to the field of histological image analysis. In particular, the present invention relates to a method and system for generating a training set in order to train a model analysing the histological images.

### BACKGROUND

In modern clinical practice, histopathology slide analysis based on histological images is an important step for many diagnoses, especially in oncology. In order to improve diagnostic accuracy and reduce the evaluation time, digital histopathological analysis plays a crucial part. Digital histopathological analysis is revolutionizing the field of pathology by integrating advanced computer vision and machine learning technologies into diagnostic workflows.

However, in the case of digital histopathological analysis, highly trained pathologists must first review vast whole-slide-images of extreme digital resolution, such as 0.25 or 0.5 micron per pixel (MPP), across multiple zoom levels in order to locate abnormal regions of cells, or in some cases single cells, out of millions. The goal is to create a credible and valuable training dataset for machine learning models, such that the machine learning models can, with improved accuracy, correctly analyse unknown histological images for diagnosis.

Creating such a training dataset bears several challenges. Until now, the quantification of cell nuclei and the recognition of cell types on patients' histopathology slides or tissue slides is not done at scale nor in a reproducible way, thus limiting interpretability of deep learning models in clinical research and the discovery of new biological insights.

Furthermore, extracting relevant information from tissues and tissue compositions on slides manually and visually is extremely challenging, as it is highly time-consuming and contains a high interoperative variability.

Thus, a new solution is required to be able to improve diagnosis based on histological images. In particular, it is necessary to effectively generate a powerful training dataset, such that a machine learning model, trained with this training dataset, can analyse histological images more accurately and with reduced errors.

### SUMMARY

It may be an object of the invention to provide methods and systems for improving diagnosis based on histological images.

According to an aspect, a computer-implemented method for generating a training set is provided. The training set is used to train a model analysing histological images. The method comprises extracting a plurality of tiles from a histological image, the plurality of tiles being regions in the histological image. The method further comprises selecting, from the plurality of tiles by a machine learning (ML) model, at least one tile for user annotation, wherein the at least one selected tile is annotated by a user to obtain at least one user-annotated tile. The at least one user-annotated tile is added to the training set. The at least one user-annotated tile indicates cell nuclei, cell types, and/or cell locations present in the corresponding region of the histological image.

According to another aspect, a system for generating a training set is provided. The training set is used to train a model analysing histological images. The system comprises a processing unit configured to extract a plurality of tiles from a histological image, the plurality of tiles being regions in the histological image. The processing unit is configured to select, from the plurality of tiles using a ML model, at least one tile for user annotation, wherein the at least one selected tile is annotated by a user to obtain at least one user-annotated tile. The processing unit is configured to add the at least one user-annotated tile to the training set. The at least one user-annotated tile indicates cell nuclei, cell types, and/or cell locations present in the corresponding region of the histological image.

According to another aspect, a computer-implemented method for analysing histological images is provided. The method comprises inputting histological images into a ML model. The ML model is trained on a training set generated as described above. The method further comprises outputting, by the ML model, annotated histological images, the annotated histological images showing cell nuclei, cell types, and/or cell locations present in the corresponding histological images.

According to another aspect, a computer program is provided. The computer program comprises instructions which, when the program is executed by a computer, cause the computer to carry out the methods described above.

### BRIEF DESCRIPTION OF THE DRAWINGS

FIG. 1 shows an example of a pipeline for generating a training dataset according to an embodiment.
FIG. 2 shows a method for generating a training set used to train a model analysing histological images according to an embodiment.
FIG. 3 shows an exemplary tile of a histological image.
FIG. 4 shows another exemplary tile of a histological image.
FIG. 5 shows an example of an unknown histological image analysed for diagnosis.
FIG. 6 shows an exemplary tile after user annotation, wherein cell contours have been added.
FIG. 7 shows a section of the pipeline of FIG. 1 to provide examples of the ML model according to an embodiment.
FIG. 8 exemplary shows the concept of the unsupervised ML model according to an embodiment.
FIG. 9 exemplary shows the concept of the set of first trained ML models according to an embodiment.
FIG. 10 exemplary shows the concept of the second trained ML model according to an embodiment.
FIG. 11 shows a system for generating the training set 180 according to an embodiment.
FIG. 12 shows an example of a trained ML model trained on the generated training set according to an embodiment.

### DETAILED DESCRIPTION

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where a step must necessarily follow or precede another step due to some dependency. Any feature of any of the embodiments disclosed herein may be applied to any other embodiment, wherever appropriate. Likewise, any advantage of any of the embodiments may apply to any other embodiments, and vice versa. Other objectives, features, and advantages of the enclosed embodiments will be apparent from the following description.

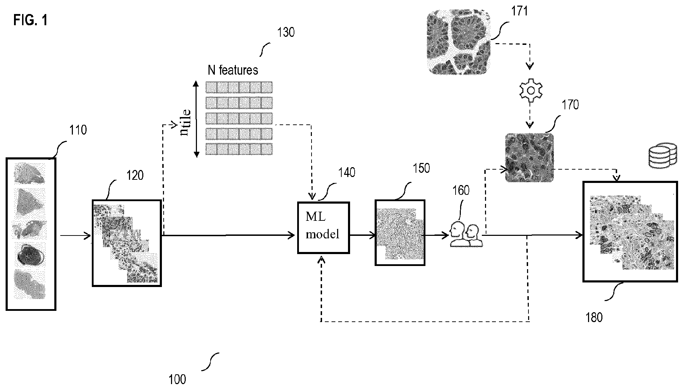

FIG. 1 shows an example of a pipeline 100 for generating a training dataset, also called training set, that may be used for training a model, such as a machine learning (ML) model using supervised learning methods, analysing histological images. The histological images, also sometimes called histology images, may be microscopic images of tissues that may be used in the analysis of diseases, particularly in cancer diagnosis. For example, the histological images show two-dimensional (2D) slices from a three-dimensional (3D) piece of tissue. For example, the histological images are digitalized images, whole slide images (WSI), or digitalized WSIs of a histological section.

The tissues may have been stained to highlight different cellular components and structures. For example, the histological section may be stained with a dye, such as Haematoxylin and Eosin (H&E), Haematoxylin Phloxine saffron (HPS), Hematoxylin Eosin Saffron (HES), or the like.

The analysis of histological images allows pathologists or diagnosis tools to diagnose diseases, understand cellular interactions, and conduct detailed anatomical studies. The accuracy of histological image analysis is therefore important since it directly impacts clinical decisions and the understanding of complex biological processes.

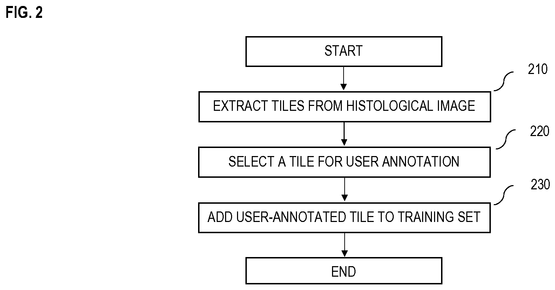

Below, FIG. 1 will be described in more detail together with the steps shown in FIG. 2. FIG. 2 shows a method for generating a training set used to train a model analysing histological images according to an embodiment.

As exemplary shown in FIG. 1, histological images 110 may be used for generating the training set. From a stack of histological images 110, obtained from a patient's body, for example, all histological images 110 or a set of histological images 110 may be used for generating the training set. For example, a filter of pre-processing method may be used to select histological images 110 including valuable information useful for generating the training set, such as histological images 110 showing specific organ sections or tissue compositions. Histological images 110 showing background, for example, may be filtered out and not used for generating the training set.

From each histological image 110 used for generating the training set, a plurality of tiles 120 may be extracted (see step S210 in FIG. 2), wherein the plurality of tiles 120 may be regions in the histological image 110. The tiles 120 may show different cells, cell nuclei, and other cellular components and structures. By dividing or segmenting the histological image 110 into tiles 120 of smaller data size, a smaller input for the ML model 140 can be created. The ML model 140 is not only able to more easily process these smaller tiles 120 compared to the entire histological image 110 but also to determine, more adequately, which tiles 120 should be selected for user annotation (described later). For example, the ML model 140 determines to not select a part of the histological image 110 showing background for user annotation.

For example, the plurality of tiles 120 represent a tissue area of 112 x 112 µm. However, this is not limiting, and any other size for the tiles 120 may be selected. The plurality of tiles 120 may be non-overlapping or at least partially overlapping regions in the histological image 110.

From the plurality of tiles 120, at least one tile 150 for user annotation 160 may be selected (see step S220 in FIG. 2) using a machine learning (ML) model 140. User annotation 160 means that the at least one selected tile 150 may be annotated by a user, such as a pathologist, to obtain at least one user-annotated tile. For example, the at least one selected tile 150 is annotated by the user on cell-level, i.e. a cell shown in the selected tile 150 is annotated. The annotation may include cell location, detection and/or cell classification, the cell classification indicating the cell type, for example. For example, when annotating the tile, the user indicates the location of the cell and its cell type. To perform the annotation, the tile 150 for user annotation may be sent to a graphical user interface (GUI), such as an annotation viewer, wherein the user may select any cell for annotation. For example, the user clicks on the cell for cell annotation or uses any other method to select the cell for cell annotation on the GUI. By clicking on the cell and classifying the cell type of this cell, for example, the user may give the location of the cell and its cell type. Instead of clicking on the cell for cell annotation, the user may use Virtual Reality (VR) annotation, touch gestures, speech/voice commands, or the like to select the cell for cell annotation, for example.

The user-annotated tile may indicate cell nuclei, cell types, and/or cell locations present in the corresponding region of the histological image 110. In other words, the user-annotated tile may comprise additional information and classifications indicating cell nuclei, cell types, and/or cell locations of the cells present in the tile 150. If the at least one selected tile 150 is annotated by multiple users, such as pathologists, a consensus between the users may be derived.

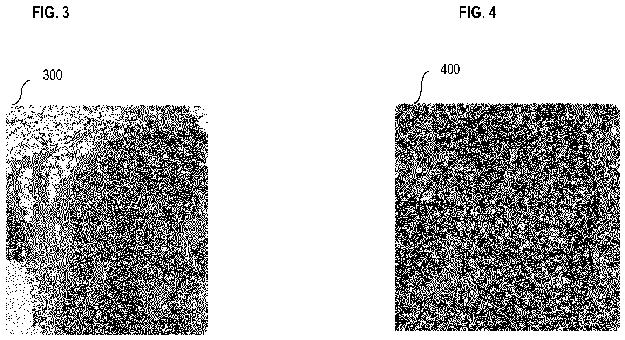

FIG. 3 shows an exemplary tile 300 of a histological image. The user annotation on tile 300 may be performed on cell level, i.e. the cells in the tile 300 have been annotated by a user, such as a pathologist, for example, by clicking on each cell. By annotating the cells in the tile 300, additional information may be added by the user. For example, the user may add cell locations and cell classifications, such as cell types, for the cells. The additional information may be represented with various colours. For example, different cell types are highlighted in different colours to easily identify the classifications.

FIG. 4 shows another exemplary tile 400 of a histological image. User annotation may be again performed on cell level. It can be seen that tile 400 has a higher density of various cells. Similar to tile 300, the additional information, added by the user during user annotation, may be represented in various colours. For example, different cell types are highlighted in different colours to easily identify the classifications performed by the user.

By selecting a tile 150 for user annotation using the ML model 140, the number of tiles, which need to be annotated by the user, is reduced, because the user is not required to annotate all tiles 120. Thus, the burden on the user in interacting with the GUI is reduced. This means that the operations of the GUI are reduced, as well. Furthermore, only the most interesting and valuable tiles, such as tiles with a higher level of information content, are annotated by the user. The ML model 140 is, for example, able to discard tiles 120 only showing background and forward tiles with a higher information content, such as tiles showing specific tissue sections or tiles with relevant cell types, to the user for annotation which will later be useful for training a model analysing unknown histological images. Without tile selection as described above, the user would need to annotate a vast number of tiles to ensure that relevant cell types, for example, are present in the training set 180.

After user annotation, the user-annotated tiles may be added (see step S230) to the training set 180. The training set 180 may be stored in a storage unit or database to be later used for training. The training set 180 may already comprise other annotated tiles, wherein the user-annotated tiles are added to enrich the training set 180 with valuable tiles correctly annotated by pathologists. As an alternative, the training set 180 may only comprise the user-annotated tiles without any other annotated tiles. In all cases, it is possible to generate a high-quality and competitive proprietary dataset as the training set 180 comprising a variety of user-annotated tiles in terms of indications covered and staining, for example. The training set 180 can be used to train any supervised ML model to accurately analyse unknown histological images and therefore improve diagnosis.

The steps S210, S220, and S230 may be iteratively or repeatedly performed for the histological images 110 and tiles 120 in order to obtain a training set 180 comprising a plurality of user-annotated tiles.

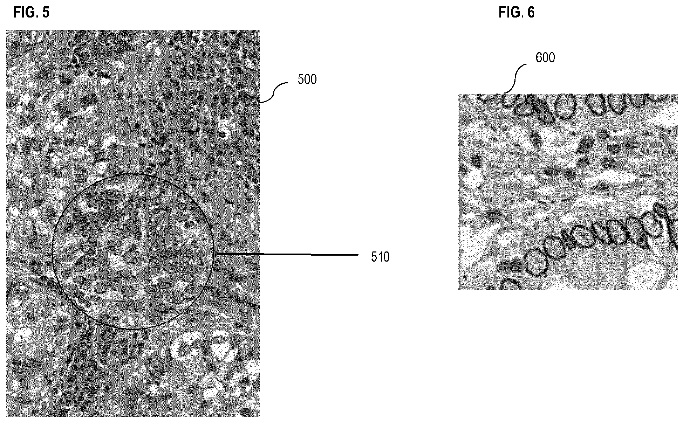

An example of an unknown histological image is shown in FIG. 5. The histological image 500 shows various unannotated cells and structures. Since the supervised ML model has been trained on the training set 180, the supervised ML model may be able to analyse the histological image 500 on a cell level and annotate the cells present in the histological image. For example, in section 510 of the histological image 500, the supervised ML model is able to detect and precisely identify the location of different cells, for example which pixels correspond to the nuclei of which cells, and is able to classify the cell types (here: 38 plasma cells, 16 lymphocytes, 9 macrophages, 6 tumour cells, and 2 fibroblasts; for emphasis, the cells are highlighted in section 510). Based on this detailed annotation, a more accurate diagnosis can be provided. For example, the histological image 500, annotated by the supervised ML model, can be provided to a pathologist or a diagnosis tool. The diagnosis tool can automatically, with or without human interaction, generate a diagnosis result with improved accuracy thanks to the cell locations and classifications obtained by the supervised ML model trained with the improved training set. Based on the precise cell locations and cell classifications, the diagnosis tool may retrieve nuclear morphology (such as roundness, eccentricity, aspect ratio, area, etc.), cell-cell interaction (such as neighbourhood enrichment, cell co-occurrence, etc.), or spatial organization (such as a location (stroma, tumour margin, tumour core, or the like), distance to tumour core centroid, distance to tumour core border, or the like), for example, to provide an accurate diagnosis. Also, the results of the supervised ML model can be used for scientific hypothesis generation. For example, they can be used to generate a scientific hypothesis that, in a specific cancer type, there are more plasma cells which are structured in a certain way compared to other cancer types.

According to an embodiment, before inputting the tiles 120 into the ML model 140, a plurality of feature vectors 130 may be optionally extracted from the plurality of tiles 120 (see the dashed arrows in FIG. 1). This means that the tiles 120 may be encoded to vectors to have a simple feature presentation. The feature vectors may be a collection of numbers, typically a few hundreds to a few thousands, encoding information about the tiles 120. The extraction may be done using, for example, a pre-trained foundation model which is able to extract the feature vectors 130 for each tile 120.

There may be no immediate and simple correspondence between the numbers included in the feature vectors and physical characteristics of the tiles 120. Instead, the pre-trained foundation model may "compress" the tiles 120 in a most efficient way. For example, a typical tile may have dimensions of 224 x 224 x 3 ("224" indicating the number of pixels, and "3" indicating red, green, and blue channels), wherein a given pre-trained foundation model may reduce this tile to 768 feature vectors, i.e. abstract descriptors, while trying to encode the relevant information from the tile.

The pre-trained foundation model may be a model trained with Momentum Contrast (MoCo), which is a self-supervised learning algorithm with a contrastive loss, or may be a Phikon model, which is a self-supervised learning model for histopathology, such as histological images, trained with iBOT. iBOT is a self-supervised learning algorithm with a Masked Image Modelling (MIM) loss. However, this is not limiting, and any other pre-trained foundation model for feature extraction may be used. As indicated above, the plurality of feature vectors 130 may represent or encode local descriptors of the tile 120, such as local characteristics of the tiles 120. The local characteristics of the tiles 120 may be features of the tiles 120, such as cell types present in the tiles 120, as opposed to global descriptors of the tiles 120, such as total number of cells present in the tiles 120, average colour of the tiles 120, etc.

The ML model 140 may select the at least one tile for user annotation using the plurality of feature vectors 130. By extracting feature vectors 130 and selecting the tiles for user annotation based on these feature vectors 130, thus reducing the data for processing, the workload of the ML model 140 can be reduced compared to a case where the ML model 140 processes the entire tiles 120 to perform the selection. However, even if the data to be processed is reduced by extracting feature vectors, the quality of the tile selection for user annotation may not be reduced.

A training set 180 as described above comprising a variety of user-annotated tiles is already a highly valuable dataset. It is ensured that a model analysing unknown histological images is well trained and able to correctly analyse unknown histological images for improved diagnosis. However, if it is desired to enrich the training set 180 even further with additional annotations and information, the contours of cells or cell nuclei may be optionally derived. Deriving the contours may mean obtain the contours. Thus, continuing with the pipeline of FIG. 1, after the user annotation 160 has been performed, contours of cells or cell nuclei annotated by the user may be optionally derived for each user-annotated tile before being added to the training set 180 (see dashed arrows in FIG. 1 after user annotation 160). The training set 180 may then comprise the at least one user-annotated tile with the additionally derived contours.

An example of a tile with derived cell contours, i.e. a region of a histological images with highlighted cell contours, is shown in FIG. 6. FIG. 6 shows a tile 600 after user annotation, wherein the cell contours have been added (see the black circles around the cells in FIG. 6).

To derive the contours of the cells or the cell nuclei, a contour deriving ML model 170 may be used. The contour deriving ML model 170 may be a trained ML model being trained on a dataset 171. The dataset 171 may comprise input-output data pairs, the input-output pairs comprising histological image regions as input data and corresponding contour annotated histological image regions as output data. The contour annotated histological image regions may indicate known contours of cells or cell nuclei present in the histological image regions. For example, the contour deriving ML model 170 is pretrained to derive nuclei contours and cell contours from a single click in the cell, wherein the contour deriving ML model 170 may be able to derive precisely which pixels belong to the cell.

Thus, the trained contour deriving ML model 170 is able to automatically find the contours of the cells or cell nuclei and create the user-annotated tile with the additional derived contours. The trained contour deriving ML model 170 may be a trained neural network or deep learning model. As an example, the known NuClick algorithm may be used as contour deriving ML model 170 which might have been trained on public and commercially available datasets. Examples for public and commercially available datasets are ConSeP (https://paperswithcode.com/dataset/consep) or PCNS (https://www.cancerimagingarchive.net/analysis-result/pan-cancer-nuclei-seg/). The NuClick algorithm is a CNN-based approach to speed up collecting annotations for the cells or cell nuclei. It requires minimum interaction from the annotator, such as the pathologist. For cell nuclei and cells in histology and cytology images, one click by the pathologist inside each cell is enough for the NuClick algorithm to yield a precise contour annotation. Such a contour deriving ML model 170 may accelerate the contour annotation process by approximately 30% and improve the contour annotation quality in comparison to pathologists manually finding and annotating the contours of the cells or cell nuclei.

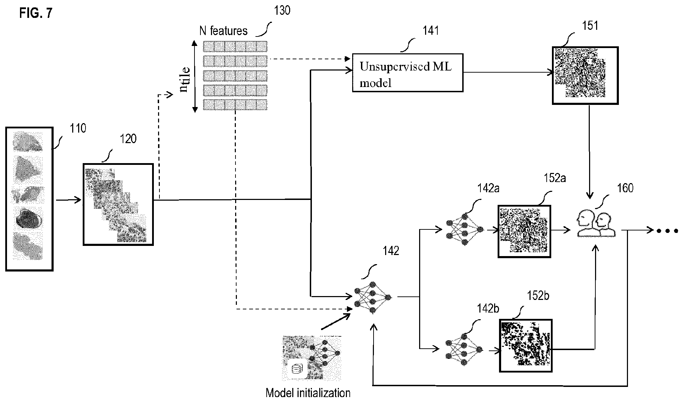

FIG. 7 shows a section of the pipeline of FIG. 1 to give examples of the ML model 140 according to an embodiment. The reference signs 110, 120, 130, and 160 refer to the same parts with the same reference signs as described with respect to FIG. 1. Thus, a detailed description of these parts is omitted for conciseness reasons. Furthermore, for conciseness reasons, parts 170, 171, and 180 of FIG. 1 are not shown in FIG. 7 but may still be part of FIG. 7.

As shown in FIG. 7, the ML model 140 may comprise an unsupervised ML model 141, i.e. a ML model using unsupervised learning, and/or a supervised ML model 142, i.e. at least one ML model (see, for example, ML models 142a and 142b in FIG. 7) using supervised learning, in order to select the at least one tile for user annotation. An aim of the ML models 141 and 142 is to adequately reduce or limit the number of tiles for user annotation in order to reduce the number of operations of the GUI used for user annotation, for example. Either the unsupervised ML model 141 or the supervised ML model 142 may be performed, or the unsupervised ML model 141 and the supervised ML model 142 may be performed in parallel. Thus, tiles for user annotation may be selected in parallel using a plurality of unsupervised and supervised ML models. The supervised ML model 142 may be initialized by pretraining on a small training set to adequately process the tiles 120. It is also possible that the unsupervised ML model 141 and the supervised ML model 142 are performed sequentially, as described in more detail below. For example, it is possible to first execute the supervised ML model 142 and then perform clustering using the unsupervised ML model 141 in order to select the tiles for user annotation. This may be done to further reduce the number of tiles for user annotation and thus the number of operations of the GUI.

If the unsupervised ML model 141 and the supervised ML model 142 are performed in parallel, the unsupervised ML model 141 and the supervised ML model 142 may each select at least one tile for user annotation and the user may annotate each selected tile to obtain user-annotated tiles. Thus, the user, such as the pathologist, may receive tiles for user annotation from different ML models. This may result in a training set 180 having a variety of different user-annotated tiles and therefore to a highly valuable training set 180, which improves the training phase of a model analysing unknown histological images and therefore the diagnosis.

As further shown in FIG. 7 (or in FIG. 1: see the loop indicated with a dashed arrow), after user annotation 160, the user-annotated tile may be repeatedly or iteratively fed back to the initialized supervised ML model 142 for refining or retraining the initialized supervised ML model 142. In the next round, for example for the same or new histological images 110 or tiles 120, the at least one tile 150 for user annotation is then selected by the refined or retrained supervised ML model. Thus, by feeding back the user-annotated tiles, a training set for the supervised ML model 142 can be iteratively grown, leading to an improved training of the supervised ML model 142 and better analysis of the tiles 120 by the supervised ML model 142. Once a specific number of rounds has been performed, feeding back the user-annotated tiles to the supervised ML model 142 may be stopped. The user-annotated tiles may be added to the training set 180 or may be input to the contour deriving ML model 170, as discussed with respect to FIG. 1, once the user annotation is finished.

According to an embodiment, the unsupervised ML model 141 may divide the plurality of tiles 120 into groups or clusters using a clustering method, such as K-means clustering, coreset clustering, or the like. The clustering method may be a fixed method which is neither initialized nor iteratively trained. The clustering method may be simply applied to different tiles 120 at each round to group the tiles 120 according to their characteristics, also called tile features, such as their morphologies, shown tissue structures, staining, or the like. For example, the groups or clusters are generated on tile features, such as numerical representations of the tiles 120 obtained by passing the tiles 120 inside the unsupervised ML model 141. The diversity of these tile features may represent the diversity of morphologies, tissues, staining differences, contrast differences in the tiles 120, inter patient differences, etc. Tiles 120 having similar characteristics are thus grouped into the same group or cluster, for example. In order to reduce the workload of the unsupervised ML model 141, feature vectors 130 instead of the tiles 120 may be input into the unsupervised ML model 141 (see the dashed arrows in FIG. 7).

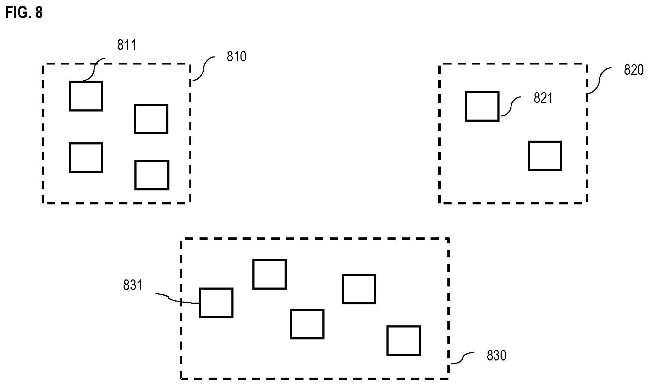

The concept of the unsupervised ML model 141 is exemplary shown in FIG. 8. Here, the plurality of tiles 120 are divided or clustered into three groups 810, 820, and 830. However, this is not limiting, and the number of groups can be any number greater than or equal to two. From each group 810, 820, and 830, at least one tile is selected for user annotation (see at least one tile 151 in FIG. 7). For example, group 810 comprises four tiles, wherein tile 811 is selected for user annotation. For example, group 820 comprises two tiles, wherein tile 821 is selected for user annotation. For example, group 830 comprises four tiles, wherein tile 831 is selected for user annotation. However, this is not limiting, and the groups may comprise more or less tiles and more than one tile per group may be selected for user annotation.

Thus, groups or clusters may be created by the unsupervised ML model 141 and the at least one tile 151 for user annotation may be randomly selected from each cluster, i.e. random sampling on the clusters may be performed. By performing the tile selection on the clusters, a representative for each tile characteristic is selected even in the case of random selection. This ensures that the user may receive diverse tiles from each cluster for user annotation, e.g. tiles with different characteristics, leading to a training set comprising a variety of user-annotated tiles with different characteristics. In other words, redundant tiles, i.e. tiles having similar characteristics, can be clustered in the same group and only a subset of randomly selected tiles 151 from each group is passed on to the user for user annotation, reducing the number of tiles for user annotation and the number of operations for the GUI, while creating a highly diverse training set with user-annotated tiles of different characteristics. This makes the training set 180 more valuable compared to a training set only comprising tiles with the same characteristics.

According to an embodiment, the supervised ML model 142 may be an active learning model and may be a set of first trained ML models 142a and/or a second trained ML model 142b. The ML models 142a and 142b may be the same at the initialization step and may be initialized to detect at least one specific cell type. For example, the ML models 142a and 142b may be pretrained on a small training set to be able to detect the presence or absence of at least one specific cell type. For example, the trained ML models 142a and 142b are trained to predict the presence of cell types, such as tumour cells, muscle cells, lymphocytes, granulocytes, monocytes, fibroblasts, plasma cells, eosinophil, red blood cells, platelets, apoptotic body, mitotic figure, endothelial, epithelial, macrophage, neutrophils etc., at tile level or cell level. These trained ML models 142a and 142b may be initialized on a pre-collected set, created by pathologists, composed of yes/no labels on the presence of a given cell type at tile level or composed of annotations on cell level indicating the cell type for each cell present. The trained ML models 142a and 142b may be further retrained or refined using an iteratively growing training set by feeding back the user-annotated tiles.

The trained ML models 142a may have the same architecture as the trained ML model 142b. The trained ML models 142a and 142b may be trained neural networks. The trained ML models 142a and 142b may be Multi-Layer Perceptron (MLP) models or more complex vision transformers (ViT).

First, the process with respect to the set of first trained ML models 142a is described in more detail. The set may comprise a plurality of first trained ML models 142a. By using the set of first trained ML models 142a, uncertainty sampling may be performed, wherein the uncertainty may be computed by disagreement across the set of first trained ML models 142a.

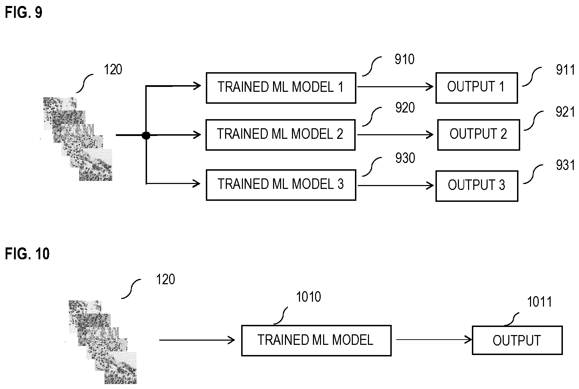

The concept of the uncertainty sampling is exemplary shown in FIG. 9. Here, the set of first trained ML models 142a may comprise three trained ML models 910, 920, and 930. However, this is not limiting, and the set may comprise any number of trained ML models greater than or equal to two. The first trained ML models 910, 920, 930 may be trained on at least one specific cell type, such as lymphocytes, plasma cells, granulocytes, monocytes, eosinophil, endothelial, macrophages, neutrophils, tumour cells, epithelial, fibroblasts, red blood cells, platelets, muscle cells, apoptotic bodies, mitotic figures, etc. This means that, for the cell types that are of interest, there is a plurality of first trained ML models 910, 920, 930 detecting these cell types in the tiles 120. With respect to FIG. 9, this means that the trained ML models 910, 920, and 930 may each be trained on the same specific cell type, e.g. lymphocytes, or on a same list of specific cell types, e.g. lymphocytes, granulocytes, and monocytes, so that these trained ML models 910, 920, and 930 can detect the presence of this specific cell type or of the list of specific cell types in the tiles 120. The same tiles 120 may be input into each trained ML model 910, 920, and 930 to obtain the outputs 911, 921, and 931. Instead of inputting the tiles 120, the respective feature vectors 130 may be input into the trained ML models 910, 920, 930.

Ideally, there would be no discrepancy in the outputs 911, 921, and 931, because the inputs of the trained ML models 910, 920, and 930 are the same and the ML models 910, 920, and 930 have been trained on the same cell type or on the same list of cell types. However, because errors may occur in the trained ML models 910, 920, and 930 or it may be difficult to correctly analyse some tiles 120 due to the tiles' characteristics, the outputs 911, 921, and 931 may differ. This discrepancy is used by the set of first trained ML models 142a to determine which tiles should be selected for user annotation.

In order to select at least one tile 152a for user annotation, the plurality of tiles 120, or the feature vectors 130 of the plurality of tiles if extracted, may be input into each trained ML model 910, 920, 930 from the set of first trained ML models 142a. An output 911, 921, 931 of each trained ML model 910, 920, 930 may be at tile level or at cell level.

An output at tile level may be a flag for each tile of the plurality of tiles 120. A flag may be assigned to each tile 120, wherein each flag may indicate a potential presence or absence, i.e. certainty of uncertainty, of a specific cell type in the respective tile 120. For example, the flags are probability flags or probability scores with a value between 0 and 1 (0: absence of specific cell type in tile, 1: presence of specific cell type in tile), wherein the probability flags or scores may indicate the probability of the cell type being present or absent in the tile 120. If the ML model 910, 920, 930 have been trained on lymphocytes, for example, a flag of 0.6, for example, output by a ML model 910, 920, or 930 indicates a probability of 60% that lymphocytes are present in the respective tile.

If the ML models 910, 920, 930 have been trained on a list of specific cell types, the flag output by the ML model 910, 920, or 930 may comprise a plurality of probability flags, each probability flag indicating the probability of presence or absence of a cell type in the list of specific cell types. If the ML models 910, 920, 930 have been trained on a list of lymphocytes, granulocytes, and monocytes, for example, a flag may comprise a plurality of flags {0.6, 0.4, 0.7}, for example, output by a ML model 910, 920, or 930. 0.6 may indicate a probability of 60% that lymphocytes are present in the respective tile, a probability of 40% that granulocytes are present in the respective tile, and a probability of 70% that monocytes are present in the respective tile.

At tile level, the set of first trained ML models 142a, 910, 920, 930 may have been trained on input-output data pairs, the input-output data pairs comprising histological image regions as input data and corresponding flags as output data, wherein the flags may indicate presence or absence of known cell types, such as lymphocytes, granulocytes, monocytes, eosinophil, red blood cells, platelets, etc., in the respective histological image regions.

An output 911, 921, 931 at cell level may be a plurality of machine-annotated tiles, i.e. tiles annotated on cell level by the trained ML models 142a, 910, 920, 930. Each machine-annotated tile from the plurality of machine-annotated tiles may indicate cell nuclei, cell types, and/or cell locations for the cells present in the plurality of tiles 120. At cell level, the set of first trained ML models 142a, 910, 920, 930 may have been trained on input-output data pairs, the input-output data pairs comprising histological image regions as input data and annotated histological image regions as output data, wherein the annotated histological image regions may indicate known cell nuclei, cell types, and/or cell locations for the cells present in the histological image regions.

The flags or the plurality of machine-annotated tiles output from each trained ML model 910, 920, 930 may be compared respectively. For example, an image analysis tool for comparing the machine-annotated tiles may be used. At least one tile, for which the outputs 911, 921, 931 of the first trained ML models 910, 920, 930 differ, may be selected as the at least one tile 152a for user annotation. Thus, the tiles, for which the set of trained ML models 142a, 910, 920, 930 indicates uncertainty, are selected for user annotation, leading to a training set 180 comprising the most critical tiles or the tiles that are difficult to classify, e.g. the tiles for which the outputs 911, 921, 931 of the trained ML models 910, 920, 930 differ. When a model is trained with a training set 180 comprising these critical tiles, the model will be able to analyse unknown histological images with improved accuracy.

For example, after comparing the flags or the plurality of machine-annotated tiles 911, 921, 931 from each trained ML model 910, 920, 930, a certainty ratio may be calculated for each tile from the plurality of tiles 120. Thus, each tile from the plurality of tiles 120 may be assigned to a certainty ratio. The certainty ratios associated with the plurality of tiles 120 may indicate how many trained ML models 910, 920, 930 from the set of first trained ML models 142a arrived at the same output 911, 921, 931 when inputting the same tile 120. For example, if the outputs 911 and 921 are the same and output 931 differs from outputs 911, 921, the certainty ratio may be set to 2/3 or 0.67. Alternatively, an uncertainty ratio may be calculated and assigned, indicating how many trained ML models 910, 920, 930 arrived at different outputs 911, 921, 931 (here, the uncertainty ratio may be set to 1/3 or 0.33, for example).

According to an embodiment, the certainty ratio, or uncertainty ratio, for each tile may be compared with a predetermined or preselected threshold. If the certainty ratio is below the predetermined threshold, or if the uncertainty ratio is above the predetermined threshold, the corresponding tile may be selected as the at least one tile 152a for user annotation. The certainty ratio, uncertainty ratio, and the predetermined threshold may each be a value between 0 and 1. For example, the predetermined threshold is 0.4. If the certainty ratio of a tile is 0.67, this tile may not be selected for user annotation. If, however, the certainty ratio of a tile is 0.3, meaning that only 30% of the ML models 910, 920, 930 arrived at the same output 911, 921, 931 when inputting the same tile 120, this tile may be selected for user annotation. Thus, the tiles with a high uncertainty can be selected for user annotation.

According to an embodiment, it is possible to execute the set of first trained ML models 142a and the previously described unsupervised ML model 141 sequentially. For example, if there is a set of tiles 120 for which the certainty ratios are below the predetermined threshold, meaning that there is a plurality of tiles 120 being assigned to certainty ratios below the predetermined threshold, the set of tiles 120, i.e. the plurality of tiles 120 being assigned to certainty ratios below the predetermined threshold, are divided into groups or clusters using a clustering method, wherein at least one tile from each group or cluster is selected for user annotation. The unsupervised ML model 141 as described above may be used to perform the clustering method. Instead of the certainty ratios, the uncertainty ratios may be used, wherein a set of tiles 120 being assigned to uncertainty ratios above the predetermined threshold may be divided into groups or clusters using the clustering method.

This means that the set of first trained ML models 142a may be used to identify the tiles 120 with a high uncertainty, i.e. the tiles 120 being assigned to certainty ratios below the predetermined threshold or the tiles 120 being assigned to uncertainty ratios above the predetermined threshold, wherein the number of tiles 120 for user annotation, and thus the number of operations of the GUI, can be further reduced by applying an unsupervised learning algorithm, such as the above described unsupervised ML model 141, to group or cluster the tiles 120 with a high uncertainty. Random sampling can be performed for each group or cluster in order to randomly select the at least one tile for user annotation from each group or cluster.

It is noted that the training phase for any ML model is usually referred to as an initialization step in active learning. In this case, the set of first ML models 142a may have been initialized by collecting a few regions having specific cell types by manual pathologist selection, enough volume to have a decent cell detection, but still a small volume as it is very time-consuming. However, after this initialization step, cell detection might not be performing very well. In order to improve the cell detection, the initialized or trained first ML models 142a may be refined or retrained, as already briefly mentioned above, by feeding back the user-annotated tiles. It is noted that, if the trained ML models 910, 920, 930 work at cell level, the user-annotated tiles fed back may indicate the cell nuclei, cell types, and/or cell locations for cells present in the plurality of tiles 120, because the user manually annotated the tiles at cell level. If the trained ML models 910, 920, 930 work at tile level, the user may, in addition to cell level annotation, manually assign a flag to each tile, the flag, e.g. a percentage flag or score as described above, indicating presence or absence of specific cell types in the tiles. For refinement, the user-annotated tiles with flags may be fed back.

By feeding back user-annotated tiles (with or without additional flags), cell detection can be improved at each round.

In order to fasten the training phase of the first ML models 910, 920, 930, reduce the computing cycles of the first ML models 910, 920, 930, and improve the tile analysis, the plurality of tiles 120 may be ranked or sorted according to their assigned certainty ratios or uncertainty ratios. For example, the tile having the lowest certainty ratio, or the highest uncertainty ratio, may be ranked first, followed by the tile with the second lowest certainty ratio, or the second highest uncertainty ratio, and so forth. The at least one tile for user annotation may be selected according to the ranking. This means that the most uncertain tiles, i.e. the tiles having the lowest certainty ratio or the highest uncertainty ratio, which can be determined with the ranking, can be selected first for user annotation. For example, the first ten tiles with the lowest certainty ratios, or the highest uncertainty ratios, may be selected for user annotation. This is not limiting, and any other number of tiles may be selected according to the ranking. By first feeding back the resulting user-annotated tiles for the highest ranked tiles, i.e. the user-annotated tiles with the initially lowest certainty ratio or initially highest certainty ratio, the set of first trained ML models 142a can be refined or retrained faster, leading to better outputs 911, 921, 931 also on more critical tiles which would usually lead to erroneous outputs. Thus, more accurate outputs 911, 921, 931 can be achieved for the tiles 120 input into the refined first ML models 910, 920, 930.

Second, the process with respect to the second trained ML model 142b is described in more detail. While uncertainty sampling is performed by the set of first trained ML models 142a, the second trained ML model 142b can be used for enriching the training set 180 with tiles showing specific cell types, for example.

For example, by using the second trained ML model 142b, rare cell enrichment for the training set 180 can be performed. Rare cell enrichment means that tiles for user annotation and, thus, for the training set 180 can be selected with respect to rare cells. It is, for example, desired to maximize the probability of detecting rare cell types, i.e. cell types considered as not being frequently presented in histological images. Rare cell types may be apoptotic body, mitotic figure, eosinophil, endothelial, epithelial, macrophage, neutrophil, or the like. By enriching the training set 180 with user-annotated tiles showing rare cell types, the model being trained with this training set 180 will be able to accurately detect also rare cell types in unknown histological images, resulting in improved diagnosis.

FIG. 10 exemplary shows the concept of the second trained ML model 142b. Instead of having a plurality of ML models 910, 920, 930 for each cell type or for a list of cell types, wherein the tiles 120 are input to the plurality of ML models 910, 920, 930 in parallel, as shown in FIG. 9, FIG. 10 illustrates one second trained ML model 142b per cell type or per list of cell types, wherein the tiles 120 are input into one second trained ML model 142b. The second trained ML model 142b has the reference number 1010 in FIG. 10.

As shown in FIG. 10, the plurality of tiles 120 may be input into the second trained ML model 1010, wherein the second trained ML model 1010 generates the output 1011. If feature vectors 130 are extracted from the tiles 120, the feature vectors 130 may be input into the second trained ML model 1010.

If the second trained ML model 1010 works at tile level, the output 1011 of the second trained ML model 1010, being trained on a pre-specified cell type, may be flags for the plurality of tiles 120 with respect to the pre-specified cell type. Thus, each tile 120 may be assigned to a flag. The pre-specified cell type may be a rare cell or a list of rare cells that are of interest, such as an apoptotic body, a mitotic figure, an eosinophil, an endothelial, an epithelial, a macrophage, and/or a neutrophil. The flags may indicate, on tile level, potential presence or absence of the pre-specified cell type in the corresponding tiles 120. For example, the flags are probability flags or probability scores and are a value between 0 and 1 (0: pre-specified cell type is not present in tile; 1: pre-specified cell type is present in tile). If the ML model 1010 has been trained on eosinophil, for example, a flag of 0.7, for example, indicates a probability of 70% that eosinophils are present in the respective tile.

If the ML model 1010 has been trained on a list of rare cells, the flag output by the ML model 1010 may comprise a plurality of probability flags, each probability flag indicating the probability of presence or absence of a rare cell in the list of rare cells. If the ML model 1010 has been trained on a list of eosinophil and endothelial, for example, a flag may comprise a plurality of flags {0.7, 0.2}, for example, indicating a probability of 70% that eosinophils are present in the respective tile and a probability of 20% that endothelial cells are present in the respective tile.

Thus, at tile level, the second trained ML model 1010 may have been trained on a pre-specified cell type to be able to flag tiles with respect to this pre-specified cell type. For example, the second trained ML model 1010 has been trained on input-output data pairs, the input-output data pairs comprising histological image regions as input data and corresponding flags as output data, wherein the flags may indicate presence or absence of the pre-specified cell type in the respective histological image regions.

If the second trained ML model 1010 works at cell level, an output 1011 of the second trained ML model 1010 may be a plurality of machine-annotated tiles, i.e. tiles annotated by the second trained ML model 1010, with respect to the pre-specified cell type. As indicated above, the pre-specified cell type may be a rare cell or a list of rare cells that are of interest. The plurality of machine-annotated tiles may indicate cell nuclei and/or cell locations of the pre-specified cell type present in the plurality of tiles 120. At cell level, the second trained ML model 1010 may have been trained on input-output data pairs, the input-output data pairs comprising histological image regions as input data and corresponding annotated histological image regions as output data. The annotated histological image regions may indicate known cell nuclei, cell types, and/or cell locations for cells, especially for the pre-specified cell type, present in the histological image regions.

At least one tile 120, for which the flag indicates presence of the pre-specified cell type or for which the machine-annotated tile indicates presence of the cell nuclei and/or the cell locations of the pre-specified cell type, may be selected as the at least one tile 152b for user annotation.

According to an example, a predetermined threshold may be used for the selection. For example, if the flag is above the predetermined threshold or the machine-annotated tile includes the pre-specific cell type at a ratio above the predetermined threshold, the tile 120 may be selected for user annotation. For example, a ratio of 0.3 indicates that 30% of the cells present in a tile are of the pre-specified cell type. Either all user-annotated tiles may be added to the training set 180 or only the user-annotated tile actually comprising the pre-specified cell type.

According to an embodiment, similar to the set of first trained ML models 142a, it is possible to execute the second trained ML model 142a, 1010 and the previously described unsupervised ML model 141 sequentially. For example, if there is a set of tiles for which the flags indicate presence of the pre-specified cell type or for which the machine-annotated tiles indicate presence of the cell nuclei and/or the cell locations of the pre-specified cell type, the set of tiles is divided into groups using a clustering method, wherein at least one tile from each group is selected for user annotation. According to an example, if a plurality of the flags is above the predetermined threshold, meaning that there is a plurality of tiles 120 being assigned to flags above the predetermined threshold, the corresponding tiles, i.e. the plurality of tiles 120 being assigned to the flags above the predetermined threshold, are divided into groups or clusters using a clustering method. In the case of machine-annotated tiles, if there is a plurality of machine-annotated tiles including the pre-specific cell type at ratios above the predetermined threshold, the corresponding tiles 120 may be divided into groups or clusters using a clustering method, wherein at least one tile from each group or cluster is selected for user annotation. The unsupervised ML model 141 as described above may be used to perform the clustering method.

This means that the second trained ML model 142b, 1010 may be used to identify the tiles 120 with a higher density of the pre-specified cell type, i.e. the tiles 120 including the pre-specified cell type, wherein the number of tiles 120 for user annotation, and thus the number of operations of the GUI, can be further reduced by applying an unsupervised learning algorithm, such as the above described unsupervised ML model 141, to group or cluster the tiles 120 including the pre-specified cell type. Random sampling can be performed for each group or cluster in order to randomly select the at least one tile for user annotation from each group or cluster.

Similar to the set of first ML models 142a, the second ML model 142b, 1010 may have been initialized by collecting a few regions having rare cell types by manual pathologist selection, enough volume to have a decent rare-cell-detection, but still a small volume as it is very time-consuming. However, after this initialization step, rare-cell-detection might not be performing very well. In order to improve rare-cell-detection, the initialized or trained second ML model 142b, 1010 may be refined or retrained by feeding back the user-annotated tiles. If the second trained ML model 1010 works at tile level, the user may assign a flag to each user-annotated tile, the flag, e.g. a percentage flag or score, indicating presence or absence of the pre-specified cell type in the user-annotated tile. The user-annotated tiles including the flags may be fed back for refinement. By feeding back user-annotated tiles, rare-cell-detection can be improved at each round, because the second ML model 142b, 1010 can iteratively collect regions with higher numbers of examples with rare cells than the natural low prevalence.

In order to improve the training of the second ML model 142b and fasten the training phase, the plurality of tiles 120 may be ranked according to their flags or according to a rate of the pre-specified cell type present in the machine-annotated tiles. The at least one tile for user annotation may be selected according to the rank. Then, the selected user-annotated tile may be fed back to the second trained ML model 142b, 1010 for refinement or retraining. For example, the tiles 120 being ranked highest, e.g. the tiles 120 associated with a percentage flag indicating a high percentage of rare cell types present or associated with machine-annotated tiles with a high rate of rare cell types, may be selected first. Thus, the second ML model 142b, 1010 can be refined or retrained faster on the rare cell types. The step of selecting at least one tile for user annotation may be repeated for the tiles 120 using the refined second trained ML model 142b, 1010.

According to an embodiment, a GUI, such as an annotation viewer, may be used to ensure a continued or guided human-machine interaction on objective criteria, such as on the information content present in the tiles 120 as discussed above, to obtain an improved training set 180. Continued human-machine interaction may be achieved by feeding back user-annotated tiles as discussed above. Guided human-machine interaction may be achieved by guiding the users to the tiles to be annotated. A signal may be generated for the GUI causing or prompting the user to annotate the at least one tile selected for user annotation. The user-annotated tile may then be received from the GUI to be added to the training set 180 or to derive contours.

As described later, the ML models 141, 142, 142a, 142b may be implemented in a processing unit. According to an embodiment, additional contextual data regarding the plurality of tiles 120 may be received, by the processing unit, from the GUI. The contextual data may be used by the ML models 141, 142, 142a, 142b to select the at least one tile for user annotation. For example, the contextual data comprises at least one of resolution of the plurality of tiles 120, brightness of the plurality of tiles 120, and/or organ type shown by the plurality of tiles 120, which helps the ML models 141, 142, 142a, 142b to create the clusters, flags, or machine-annotated tiles.

According to another embodiment, the processing unit (described later) may receive, from the GUI, a request or prompt for tile characteristics data regarding the at least one selected tile. The tile characteristics data may be generated or obtained by the processing unit for the GUI, wherein the tile characteristics data may guide or assist the user when annotating the at least one selected tile. For example, the tile characteristics data comprises at least one of resolution of the selected tile, brightness of the selected tile, and/or organ type shown by the selected tile. The tile characteristics data may be additionally displayed to the user by the GUI during user annotation, ensuring that the user is provided with additional context regarding the tiles and can accurately and quickly annotate the tiles.

As explained in detail above, it is possible to create a high-quality training set 180 comprising a variety of user-annotated tiles on cell level.

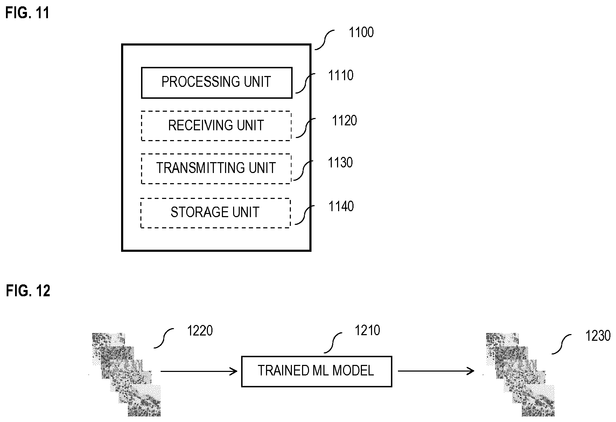

FIG. 11 shows a system 1100 for generating the training set 180. The system may comprise a processing unit 1110 and, optionally, a receiving unit 1120, a transmitting unit 1130, and a storage unit 1140. The processing unit 1110 may be the processing unit briefly mentioned above and may perform the steps described above with respect to the previous figures. For example, the processing unit 1110 extracts a plurality of tiles 120 from a histological image 110, the plurality of tiles 120 being regions in the histological image 110, selects, from the plurality of tiles 120 using a ML, model 140, at least one tile 150 for user annotation, and adds the at least one user-annotated tile to the training set 180.

It is noted that the above-described methods may be computer-implemented. For example, a distributed server system or distributed computer system may be used for implementing the above-described method steps.

The storage unit 1140 may store the instructions and steps performed by the processing unit 1110. The receiving unit 1120 and the transmitting unit 1130 may be used to receive and transmit signals and data from/to a GUI (not shown), if desired.

There is also generally considered a computer program product comprising instructions adapted for causing the processing unit 1110 and/or any other control circuitry to carry out and/or control any method described herein with regard to the system, in particular when executed on the processing unit 1110 and/or control circuitry. Also, there is considered a carrier medium arrangement carrying and/or storing a computer program product as described herein.

As indicated above, the training set 180 may be used to train a model in which unknown histological images, such as a histological image as shown in FIG. 5, are input. The model may output annotated histological images showing cell nuclei, cell types, and/or cell locations for cells present in the histological images being input into the model. This is also exemplary shown in FIG. 12.

FIG. 12 shows an example of a ML model 1210 trained on the generated training set 180. The ML model 1210 may be a neural network or a deep learning model using supervised learning methods. As shown in FIG. 12, unknown histological images 1220 may be input into the ML model 1210 being trained on the training set 180 generated as discussed in detail above. The ML model 1210 may output annotated histological images 1230. The annotated histological images may be histological images annotated on cell level, showing cell nuclei, cell types, and/or cell locations present in the corresponding histological images 1220.

According to an example, a training set 180 comprising tiles showing neutrophils and/or eosinophils can be obtained by performing the method steps described above. For example, the tiles in the training set comprises neutrophils with a rate of at least 3% or more, preferably with a rate of at least 4% or more, more preferably with a rate of 5% or more. For example, the tiles in the training set comprise neutrophils with a rate of 3.9%.

For example, the tiles in the training set comprises eosinophils with a rate of at least 1% or more, preferably with a rate of at least 2%, more preferably with a rate of 3% or more. For example, the tiles in the training set comprises eosinophils with a rate of 1.6%. If using any state-of-the-art method, it is possible to obtain tiles comprising neutrophils with a rate of only 0.97% or often even less than 0.1%, and eosinophils with a rate of only 0.7% or often even less than 0.1%.

This means that also the annotated histological images 1230 output by the ML model 1210 may show neutrophils and/or eosinophils. Thanks to the high-quality training set 180 used to train the ML model 1210, the annotated histological images 1230 output by the ML model 1210 may comprise neutrophils with a rate of at least 3% or more, preferably with a rate of at least 4% or more, more preferably with a rate of 5% or more. For example, the annotated histological images 1230 output by the ML model 1210 comprise neutrophils with a rate of 3.9%.

Furthermore, the annotated histological images 1230 output by the ML model 1210 may comprise eosinophils with a rate of at least 1% or more, preferably with a rate of at least 2%, more preferably with a rate of 3% or more. For example, the annotated histological images 1230 output by the ML model 1210 comprise eosinophils with a rate of 1.6%. If using any state-of-the-art method, it is possible to obtain annotated histological images comprising neutrophils with a rate of only 0.9% or often even less than 0.1%, and eosinophils with a rate of only 0.7% or often even less than 0.1%.

It will be apparent to those skilled in the art that various modifications and variations can be made in the entities and methods of this invention as well as in the construction of this invention without departing from the scope or spirit of the invention.

The invention has been described in relation to particular embodiments and examples which are intended in all aspects to be illustrative rather than restrictive. Those skilled in the art will appreciate that many different combinations of hardware, software and/or firmware will be suitable for practicing the present invention.

Moreover, other implementations of the invention will be apparent to those skilled in the art from consideration of the specification and practice of the invention disclosed herein. It is intended that the specification and the examples be considered as exemplary only. To this end, it is to be understood that inventive aspects lie in less than all features of a single foregoing disclosed implementation or configuration. Thus, the true scope and spirit of the invention is indicated by the following claims.

## Claims

1. A computer-implemented method for generating a training set used to train a model analysing histological images, the method comprising:
extracting a plurality of tiles from a histological image, the plurality of tiles being regions in the histological image;
selecting, from the plurality of tiles by a machine learning, ML, model, at least one tile for user annotation, wherein the at least one selected tile is annotated by a user to obtain at least one user-annotated tile;
and adding the at least one user-annotated tile to the training set;
wherein the at least one user-annotated tile indicates cell nuclei, cell types, and/or cell locations present in the corresponding region of the histological image.

2. The method according to claim 1, wherein the ML model comprises an unsupervised ML model and/or a supervised ML model in order to select the at least one tile for user annotation.

3. The method according to claim 2, wherein the unsupervised ML model and the supervised ML model are performed in parallel, wherein the unsupervised ML model and the supervised ML model each select at least one tile for user annotation, the user annotating each selected tile to obtain user-annotated tiles; or
wherein the unsupervised ML model and supervised ML model are performed sequentially.

4. The method according to claim 2 or 3, further comprising
repeatedly feeding back the user-annotated tile to the supervised ML model for refining the supervised ML model, and selecting, by the refined supervised ML model, at least one tile for user annotation.

5. The method according to any one of claims 2 to 4, wherein the unsupervised ML model divides the plurality of tiles into groups using a clustering method, wherein at least one tile from each group is selected for user annotation.

6. The method according to any one of claims 2 to 5, wherein the supervised ML model is a set of first trained ML models; and
wherein the step of selecting the at least one tile for user annotation further comprises:
inputting the plurality of tiles into each trained ML model from the set of first trained ML models, an output of each trained ML model being flags for the plurality of tiles or an output of each trained ML model being a plurality of machine-annotated tiles, wherein each flag indicates presence or absence of a specific cell type in the respective tile, and wherein each machine-annotated tile from the plurality of machine-annotated tiles indicates cell nuclei, cell types, and/or cell locations for cells present in the plurality of tiles,
comparing the flags or the plurality of machine-annotated tiles from each trained ML model respectively, and
selecting at least one tile, for which the outputs of the set of first trained ML models differ, as the at least one tile for user annotation.

7. The method according to claim 6, wherein the step of selecting the at least one tile for user annotation comprises further comprises:
after comparing the flags or the plurality of machine-annotated tiles from each trained ML model, calculating a certainty ratio for each tile from the plurality of tiles, the certainty ratios indicating how many trained ML models from the set of first trained ML models arrived at the same output when inputting the same tile.

8. The method according to claim 7, further comprising:
comparing the certainty ratio for each tile with a predetermined threshold; and
if the certainty ratio is below the predetermined threshold, selecting the corresponding tile as the at least one tile for user annotation.

9. The method according to claim 8, further comprising:
if there is a set of tiles for which the certainty ratios are below the predetermined threshold, dividing the set of tiles into groups using a clustering method, wherein at least one tile from each group is selected for user annotation.

10. The method according to any one of claims 7 to 9, further comprising:
ranking the plurality of tiles according to the certainty ratios and selecting the at least one tile for user annotation according to the ranking;
feeding back the user-annotated tile to the set of first trained ML models for refining each trained ML model in the set of first trained ML models; and
repeating the step of selecting the at least one tile for user annotation, using the refined set of first trained ML models.

11. The method according to any one of claims 6 to 10, wherein the set of first trained ML models has been trained on input-output data pairs, the input-output data pairs comprising histological image regions as input data and corresponding flags or corresponding annotated histological image regions as output data, wherein the flags indicate presence or absence of known cell types in the respective histological image regions and the annotated histological image regions indicate known cell nuclei, cell types, and/or cell locations for cells present in the histological image regions.

12. The method according to any one of claims 2 to 11, wherein the supervised ML model is a second trained ML model; and
wherein the step of selecting the at least one tile for user annotation further comprises:
inputting the plurality of tiles into the second trained ML model, an output of the second trained ML model being flags for the plurality of tiles with respect to a pre-specified cell type or an output of the second trained ML model being a plurality of machine-annotated tiles with respect to a pre-specified cell type, wherein the flags indicate presence or absence of the pre-specified cell type in the corresponding tiles, and wherein the plurality of machine-annotated tiles indicates cell nuclei and/or cell locations of the pre-specified cell type present in the plurality of tiles, and
selecting at least one tile, for which the flag indicates presence of the pre-specified cell type or for which the machine-annotated tile indicates presence of the cell nuclei and/or the cell locations of the pre-specified cell type, as the at least one tile for user annotation, wherein the at least one user-annotated tile is added to the training set if the at least one user-annotated tile comprises the pre-specified cell type.

13. The method according to claim 12, further comprising:
if there is a set of tiles for which the flags indicate presence of the pre-specified cell type or for which the machine-annotated tiles indicate presence of the cell nuclei and/or the cell locations of the pre-specified cell type, dividing the set of tiles into groups using a clustering method, wherein at least one tile from each group is selected for user annotation.

14. The method according to claim 12 or 13, wherein the step of selecting the at least one tile for user annotation further comprises:
ranking the plurality of tiles according to their flags or ranking the plurality of machine-annotated tiles according to a rate of the pre-specified cell type present;
selecting the at least one tile for user annotation according to the rank;
feeding back the user-annotated tile to the second trained ML model for refining the second trained ML model; and
and repeating the step of selecting the at least one tile for user annotation, using the refined second trained ML model.

15. The method according to any one of claims 12 to 14, wherein the second trained ML model has been trained on input-output data pairs, the input-output data pairs comprising histological image regions as input data and corresponding flags or corresponding annotated histological image regions as output data, wherein the flags indicate presence or absence of the pre-specified cell type in the respective histological image regions and the annotated histological image regions indicate known cell nuclei, cell types, and/or cell locations for cells present in the histological image regions.

16. The method according to any one of claims 12 to 15, wherein the pre-specified cell type is at least one of an apoptotic body, a mitotic figure, an eosinophil, an endothelial, an epithelial, a macrophage, and/or a neutrophil.

17. The method according to any one of claims 1 to 16, further comprising:
extracting a plurality of feature vectors from the plurality of tiles, each feature vector from the plurality of feature vectors representing a local descriptor of each tile from the plurality of tiles;
wherein the ML model selects the at least one tile for user annotation using the plurality of feature vectors.

18. The method according to any one of claims 1 to 17, further comprising:
for each user-annotated tile added to the training set, deriving contours of cells or cell nuclei annotated by the user in each user-annotated tile, wherein the training set comprises the at least one user-annotated tile with the derived contours.

19. The method according to claim 18, wherein a contour deriving ML model is used to derive the contours of the cells or the cell nuclei, wherein the contour deriving ML model is a third trained ML model being trained on input-output data pairs, the input-output data pairs comprising histological image regions as input data and corresponding contour annotated histological image regions as output data, wherein the contour annotated histological image regions indicate known contours of cells or cell nuclei present in the histological image regions.

20. The method according to any one of claims 1 to 19, further comprising:
generating a signal for a graphical user interface, GUI, causing the user to annotate the at least one selected tile; and
receiving the user-annotated tile from the GUI.

21. The method according to claim 20, further comprising:
receiving, from the GUI, contextual data regarding the plurality of tiles, the contextual data being used by the ML model to select the at least one tile for user annotation.

22. The method according to claim 21, wherein the contextual data comprises at least one of resolution of the plurality of tiles, brightness of the plurality of tiles, and/or organ type shown by the plurality of tiles.

23. The method according to any one of claims 20 to 22, further comprising:
receiving, from the GUI, a request for tile characteristics data regarding the at least one selected tile; and
generating the tile characteristics data for the GUI, the tile characteristics data guiding the user when annotating the at least one selected tile.

24. The method according to claim 23, wherein the tile characteristics data comprises at least one of resolution of the selected tile, brightness of the selected tile, and/or organ type shown by the selected tile.

25. The method according to any one of claims 1 to 24, wherein the training set is used to train a model in which histological images are input, the model outputting annotated histological images showing cell nuclei, cell types, and/or cell locations for cells present in the histological images being input into the model.

26. The method according to any one of claims 1 to 25, wherein the histological image is a digitalized image of a histological section stained with a dye.

27. The method according to claim 26,
wherein the dye is Haematoxylin and Eosin, H&E, Haematoxylin Phloxine saffron, HPS, or Hematoxylin Eosin Saffron, HES.

28. The method according to any one of claims 1 to 27, wherein the histological image is a whole slide image, WSI.

29. A system for generating a training set used to train a model analysing histological images, the system comprising:
a processing unit configured to:
extract a plurality of tiles from a histological image, the plurality of tiles being regions in the histological image,
select, from the plurality of tiles using a machine learning, ML, model, at least one tile for user annotation, wherein the at least one selected tile is annotated by a user to obtain at least one user-annotated tile; and
add the at least one user-annotated tile to the training set; and
wherein the at least one user-annotated tile indicates cell nuclei, cell types, and/or cell locations present in the corresponding region of the histological image.

30. The system according to claim 29, further configured to perform the computer-implemented method according to any one of claims 1 to 28.

31. A computer-implemented method for analysing histological images, the method comprising:
inputting histological images into a Machine Learning, ML, model, the ML model being trained on a training set generated according to any one of claims 1 to 25; and
outputting, by the ML model, annotated histological images, the annotated histological images showing cell nuclei, cell types, and/or cell locations present in the corresponding histological images.

32. The method according to claim 31, wherein the annotated histological images show neutrophils and/or eosinophils.

33. The method according to claim 32, wherein
the annotated histological images comprise neutrophils with a rate of at least 3% or more; and/or
the annotated histological images comprise eosinophils with a rate of at least 1% or more.

34. The method according to any one of claims 31 to 33, wherein the training set comprises tiles showing neutrophils and/or eosinophils.

35. The method according to claim 34, wherein the tiles comprise neutrophils with a rate of at least 3% or more; and/or
the tiles comprise eosinophils with a rate of at least 1% or more.

36. A computer program comprising instructions which, when the program is executed by a computer, cause the computer to carry out the method according to any one of claims 1 **to 28.**

37. A computer program comprising instructions which, when the program is executed by a computer, cause the computer to carry out the method according to any one of claims 31 **to 35.**
